(19) Europäisches Patentamt
European Patent Office
Office européen des brevets

(11) Publication number: **0 099 925 B1**

(12) **EUROPEAN PATENT SPECIFICATION**

(45) Date of publication of patent specification: **28.05.86**

(51) Int. Cl.$^4$: **C 09 D 5/23**

(21) Application number: **83900879.4**

(22) Date of filing: **01.02.83**

(86) International application number: **PCT/US83/00142**

(87) International publication number: **WO 83/02620 04.08.83 Gazette 83/18**

# (54) LUBRICATION OF MAGNETIC RECORDING MEDIA.

(30) Priority: **02.02.82 US 345082**

(43) Date of publication of application: **08.02.84 Bulletin 84/06**

(45) Publication of the grant of the patent: **28.05.86 Bulletin 86/22**

(84) Designated Contracting States: **BE DE FR GB NL SE**

(56) References cited:
**EP-A-0 035 633**
**SU-A- 327 225**
**US-A-3 105 824**
**US-A-3 398 011**
**US-A-3 505 844**
**US-A-4 019 994**
**US-A-4 101 435**
**US-A-4 188 434**
**US-A-4 356 098**

**IBM TECHNICAL DISCLOSURE BULLETIN, vol. 20, no. 11B, April 1978, NEW YORK (US) E.B. RIGBY: "Particulate lubricant for magnetic recording media", page 4909**

**IBM TECHNICAL DISCLOSURE BULLETIN, vol. 16, no. 8, January 1974, NEW YORK (US) P.T. CHANG et al.: "Magnetic recording media", page 2467**

(73) Proprietor: **MEMOREX CORPORATION**
**San Tomas at Central Expressway**
**Santa Clara California 95052 (US)**

(72) Inventor: **IQBAL, Sikandar**
**5824 Southview Drive**
**San Jose, CA 95138 (US)**

(74) Representative: **Kirby, Harold Douglas Benson et al**
**G.F. Redfern & Company Marlborough Lodge 14 Farncombe Road**
**Worthing West Sussex BN11 2BT (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**EP 0 099 925 B1**

**Description**

Background of the invention

This invention concerns itself with aqueous magnetic coating formulations. It is desirable at times to use aqueous formulations in place of organic formulations for the latter use expensive and toxic flammable solvents which must be captured upon drying of the magnetic formulation to prevent air pollution. Furthermore, there have been a number of recent developments in improving aqueous formulations, which make them attractive as substitutes for organic based coatings generally.

Due to the relative hardness of the electromagnetic head used to read the magnetic information stored on the recording layer, most modern magnetic coatings employ one or more lubricants to reduce friction and thus extend the life of the magnetic head and magnetic media. In the past, lubricants have been applied to magnetic layers either by incorporating them directly into the coating composition or by spraying them on the magnetic media before use. In U.S. Patent No. 2,699,408, beeswax was applied to a magnetic coating composition by first emulsifying this material before the addition. Nevertheless, beeswax is not conducive to the formation of a continuous boundary film layer on the surface of a magnetic coating. Instead, it promotes point lubrication, which cannot effectively reduce the friction and scoring generated when magnetic recording media engages the magnetic head.

As examples of prior art compositions, reference is made to U.S. Patent No. 4,263,188, which relates to an aqueous magnetic coating composition comprising a resin binder, a wetting agent, dispersant and a lubricant, such as butoxy ethyl stearate. This patent teaches mixing all of the ingredients together and dispersing them on a suitable support. U.S. Patent No. 4,076,861 similarly teaches an aqueous magnetic coating composition using a silicone oil or esters of fatty acids containing 17 or more carbon atoms as lubricants. U.S. Patent No. 4,025,448 teaches a wax composition as a lubricant for a magnetic aqueous coating composition showing that all of the ingredients are simply mixed together before coating.

IBM Technical Disclosure Bulletin, vol. 20, No. 11b, April 1978, page 4909 discloses the use of a water soluble colloidal lubricant which could be absorbed on the silica-coated gamma iron oxide layer of a multi-layer coating of the kind described in IBM Technical Disclosure Bulletin, vol. 16, No. 8, January 1974.

The use of water soluble lubricants in aqueous coating compositions presents its own problems. For example, this class of lubricants can be characterized as being water sensitive, or in other words, hydroscopic, and are thus not stable when heat is generated within the coating during frictional contact with the magnetic head. As alluded to previously, the use of waxes as a substitute for water soluble lubricants either directly or by emulsification promotes phase separation within the coating layer and thus mitigates against the presence of a continuous film on the surface of the magnetic media.

It is thus an object of the present invention to provide improved lubrication of an aqueous coating composition for forming a magnetic recording layer.

In accordance with the invention the coating composition includes an aqueous colloidal emulsion of a liquid lubricant which is itself non-aqueous and thus insoluble in the aqueous composition. By using a colloidal suspension of a lubricant, the difficulties outlined above with hydroscopicity are eliminated. The lubricant is preferably selected from one or more members of a group consisting of aliphatic and aromatic stearates, silicone oils, perfluoro alkyl polyethers and fluorinated fluids having one of the following structures:

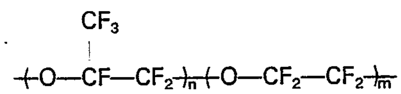

wherein n, m=40—90 and

$$F\!-\![CF(CF_3)CF_2O]_{n'}C_2F_5$$

wherein n'=14—45 and mixtures thereof.

It should be understood that no solvent is incorporated within the aqueous coating composition for the lubricants used in the present invention. Instead, a colloidal dispersion of lubricants is previously prepared and added, in a separate step, to the aqueous composition. Colloidal dispersion of the lubricant assures the formation of a stable micro-emulsion which diffuses to the surface of the magnetic coating during drying and coalesces to form a thin protective lubricated layer thereon.

Detailed description of the invention

The aqueous phase of the coating composition can be prepared by dispersing a magnetic oxide particle and dispersing agents in de-ionized water while controlling the pH from approximately 8 to 10 by the addition of suitable alkaline materials. It has been found most advantageous to mix the above at high shear while further adding water soluble resins (or emulsions) as well as defoamers. The dispersion is then subjected to milling to break up the aggregates of magnetic oxide materials. It has been found that the weight loading of oxide to water soluble resin can vary in the ratio of 60/40 to 80/20 according to the intended end use of the coating composition.

As stated previously, the present invention primarily deals with the inclusion of non-water soluble lubricants in the aqueous magnetic coating composition by pre-emulsifying the lubricants prior to their inclusion in the magnetic layer. When stearates are used as the lubricating media, they can be prepared by mixing them in

deionized water with ammonium hydroxide while keeping the pH from approximately 8 to 10 and the temperature from approximately 50—80°C. The mixture is maintained at high shear while the stearates undergo partial saponification. This causes the stearates to form a small colloidal dispersion within the deionized water, which is further broken up into sub-micron size mono-dispersed colloidal particles by, for example, passing the dispersion through a Mantan Gaulin homogenizer at a pressure from 4,000—6,000 psi (27.58—41.37 MPa). Preferred stearates are selected from the group consisting of butyl stearates and butoxy ethyl stearates.

Lubricants can also be prepared from silicone oils, such as alkyl siloxane, vinyl siloxane, or dimethyl siloxane, and fluorinated oils such as perfluoro alkyl polyethers, as well as perfluorinated polyethers. Most advantageous are those fluorinated oils having a molecular weight from approximately 1,200—7,000 such as a fluorinated oil sold under the trademark Fomblin by Montedison U.S.A., Inc.

Micro-emulsions are prepared from the above lubricants while maintaining a weight ratio of oil to water from approximately 30—50 percent. A mixed emulsifier system comprising an anionic emulsifier, for example, sodium lauryl sulfate, can be employed while the surface tension of the lubricant droplets can be reduced by adding n-decane or cetyl alcohol. For such a system, the following table represents an approximate and typical formulary for emulsification of silicone lubricants (Table 1), fluorinated lubricants (Table 2), as well as stearates (Table 3).

TABLE 1
Emulsification of silicone lubricants

| | Weight % | |
|---|---|---|
| Water (deionized) | 50.0 gms | |
| Sodium lauryl sulfate | 0.1 gms | |
| n-decane | 0.05 gms | |
| Dimethyl siloxane | 49.85 gms | |
| | 100.00 gms | total |

TABLE 2
Emulsification of fluorinated lubricants

| | Weight % | |
|---|---|---|
| Water (deionized) | 49.70 gms | |
| Sodium lauryl sulfate | 0.1 gms | |
| Carbopol (TM) | 0.25 gms | |
| n-decane | 0.05 gms | |
| Krytox (TM) (a perfluoro alkyl polyether available from E. I. du Pont de Nemours & Co.) | 49.90 gms | |
| | 100.00 gms | total |

TABLE 3
Emulsification of stearates

| | Weight % | |
|---|---|---|
| Water (deionized) | 49.8 gms | |
| Ammonium hydroxide (35% concentration) | 0.2 gms | |
| Stearate (e.g., butoxy ethyl stearate) | 50.00 gms | |
| | 100.00 gms | total |

The silicone or fluorinated oil can be further prepared by including an anionic emulsifier, while the solution is heated from 50—80°C under constant stirring. The cetyl alcohol or n-decane is mixed with the oil and added slowly to the distilled water/silicone or fluorinated oil mixture, which is stirred vigorously for a short period of time (e.g., about half an hour). The mixture can then be sonicated for several minutes to obtain a micron-emulsion. The micron-emulsion can further be broken down by homogenizing from 4,000—6,000 psi (27.58—41.37 MPa) as described above. This emulsion was found to be resistant to flocculation.

The water-based magnetic formulations generally comprise dispersing agents, magnetic

oxides, polymer solutions or latices and lubricants, as well as other additives. For dispersing agents, an ammonium solution of a polyacrylate sold by Rohm & Haas under the trade mark Tamol 165, sodium polyphosphate, and a diol sold under the trade mark Surfynol 104 having the following structure and available from Air Products Co.:

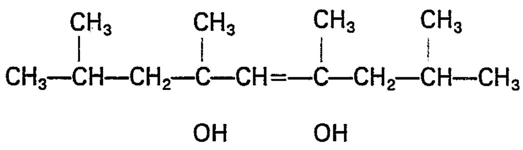

have all been found to be adequate.

Virtually any oxide could be used in practicing the present invention including, for example, $Y-Fe_2O_3$, $Fe_3O_4$, cobalt doped $Fe_3O_4$, $Cr_2O_3$, as well as various metal particles. A variety of polymer solutions or latices can be included as binders including, for example, polyblends of acrylic copolymer latices, vinyl-based and acrylic latices, polyurethane and acrylic latices and polyurethane urea-formaldehyde or melamine resins.

The water-based magnetic compositions can also contain certain additives, such as conductive carbon to reduce resistivity of the coating. Flow control agents can also be included for controlling the rheology of the composition during the coating process.

The micro-emulsion of lubricants can be directly incorporated into the above-recited formulations in an amount which can be varied according to the final intended use of the coatings. Normally, lubricants prepared according to the present invention vary from approximately 1 or 2% by weight of the total formulation. The lubricant addition is generally accomplished by merely mixing the lubricants into the formulation approximately 20—30 minutes before coating. Coating can be made on either flexible or rigid substrates and dried in air dryers where coalescence of latices and pigments takes place. The lubricants in the form of micro-emulsions are less dense than the mass of the aqueous coating, and they thus tend to coalesce on the surface of the coating, giving a thin film of oil lubricant thereon.

The quantities of lubricant found within the magnetic layer as well as lubricant on the surface thereof can be controlled in the composition. For example, as time passes and the external lubricant is consumed, lubricant found within the body of the composition can diffuse to the surface of the coating. It has been found that lubricants which are merely oversprayed on top of the coating cannot perform in such a manner. Also, overspraying of a top coating of lubricant requires additional coating equipment, and the coating thickness is difficult to control. Excess lubricant on the surface of a magnetic layer can result in increased errors in recording/playback of information noting that the thickness of a lubricant boundary layer must be in the range of from 50—80 angstroms (5—8 nm).

**Claims**

1. An aqueous coating composition for forming a magnetic recording layer, characterised in that the composition includes an aqueous colloidal emulsion of a liquid lubricant which is insoluble in said aqueous composition.

2. An aqueous coating composition according to Claim 1, characterised in that said lubricant is a member selected from the group consisting of aliphatic and aromatic stearates, silicone oils, perfluoro alkyl polyethers and fluorinated fluids having one of the following structures:

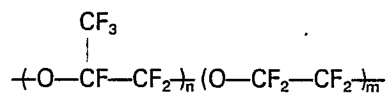

wherein n=40—90
wherein m=40—90 and

$$F-[CF(CF_3)CF_2O]_{n'}C_2F_5$$

wherein n'=14—45 and mixtures thereof.

3. An aqueous coating composition according to Claim 2, characterised in that said stearate is a member selected from the group consisting of butoxy ethyl stearate and butyl stearate.

4. An aqueous coating composition according to Claim 2, characterised in that said silicone oil is a member selected from the group consisting of alkyl siloxanes, vinyl siloxanes and dimethyl siloxanes.

5. An aqueous coating composition according to any of the preceding Claims, characterised in that said lubricant is present in an amount of approximately 1 to 2% by weight based upon the total weight of the coating composition.

**Patentansprüche**

1. Wässrige Überzugsmischung zur Bildung einer Magnetaufzeichnungsschicht, dadurch gekennzeichnet, daß die Mischung eine wässrige kolloide Emulsion eines flüssigen Schmiermittels enthält, welches in der wässrigen Mischung unlöslich ist.

2. Wässrige Überzugsmischung nach Anspruch 1, dadurch gekennzeichnet, daß das Schmiermittel aus der Gruppe ausgewählt ist, die aus aliphatischen und aromatischen Stearaten, Silikonölen, Perfluoro-Alkyl-Polyäthern und fluorierten Fluiden mit einer der folgenden Strukturen

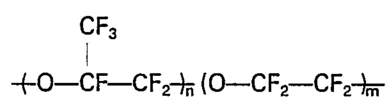

worin n=40—90
worin m=40—90 und

$$F-[CF(CF_3)CF_2O]_{n'}C_2F_5$$

worin n'=14—45 sowie Gemischen dieser Substanzen besteht.

3. Wässrige Überzugsmischung nach Anspruch 2, dadurch gekennzeichnet, daß das Stearat aus der Gruppe ausgewählt ist, die aus Butoxy-Äthylstearat und Butylstearat besteht.

4. Wässrige Überzugsmischung nach Anspruch 2, dadurch gekennzeichnet, daß das Silikonöl aus der Gruppe ausgewählt ist, die aus Alkylsiloxan, Vinylsiloxan und Dimethylsiloxan besteht.

5. Wässrige Überzugsmischung nach einem der vorstehenden Ansprüche, dadurch gekennzeichnet, daß das Schmiermittel in einer Menge von ungefähr 1 bis 2 Gewichtsprozent, bezogen auf das Gesamtgewicht der Überzugsmischung, vorhanden ist.

**Revendications**

1. Composition aqueuse de revêtement pour former une couche d'enregistrement magnétique, caractérisée en ce que la composition comprend une émulsion aqueuse colloïdale d'un lubrifiant liquide qui est insoluble dans cette composition aqueuse.

2. Composition aqueuse de revêtement selon la revendication 1, caractérisée en ce que le lubrifiant est un élément choisi dans le groupe formé par les stéarates aliphatiques et aromatiques, les huiles siliconées, les perfluoro alkyl polyéthers et les liquides fluorés ayant l'une des structures suivantes:

$$-\!\!\left(O-\underset{\displaystyle |}{\overset{\displaystyle CH_3}{CF}}-CF_2\right)_n\!\!-\!\!\left(O-CF_2-CF_2\right)_m\!\!-$$

avec n, m=40—90 et

$$F-\!\left[CF(CF_3)CF_2O\right]_{n'}C_2F_5$$

avec n'=14—45 et des mélanges de ceux-ci.

3. Composition aqueuse de revêtement selon la revendication 2, caractérisée en ce que le stéarate est un élément choisi dans le groupe formé par le butoxy éthyl stéarate et butyl stéarate.

4. Composition aqueuse de revêtement selon la revendication 2, caractérisée en ce que l'huile siliconée est choisie dans le groupe formé par les alkyl siloxane, les vinyl siloxane et les diméthyl siloxane.

5. Composition aqueuse de revêtement selon l'une quelconque des revendications précédentes, caractérisée en ce que le lubrifiant est présent sur une quantité approximativement comprise entre 1 et 2% en poids par rapport au poids total de la composition de revêtement.